(19) **Europäisches Patentamt European Patent Office Office européen des brevets**

(11) **EP 1 978 379 A1**

(12) **DEMANDE DE BREVET EUROPEEN**

(43) Date de publication:
08.10.2008 Bulletin 2008/41

(51) Int Cl.:
*G01V 11/00* (2006.01)   *G01V 1/30* (2006.01)

(21) Numéro de dépôt: 08290286.7

(22) Date de dépôt: 25.03.2008

(84) Etats contractants désignés:
AT BE BG CH CY CZ DE DK EE ES FI FR GB GR HR HU IE IS IT LI LT LU LV MC MT NL NO PL PT RO SE SI SK TR
Etats d'extension désignés:
AL BA MK RS

(30) Priorité: 30.03.2007 FR 0702405

(71) Demandeur: **IFP**
**92852 Rueil-Malmaison Cédex (FR)**

(72) Inventeurs:
• **Roggero Frédéric**
**92500 Rueil-Malmaison (FR)**
• **Enchery Gullaume**
**92500 Rueil-Malmaison (FR)**
• **Ponsot-Jacquin Catherine**
**78000 Versailles (FR)**

(54) **Méthode pour modifier graduellement des proportions de faciés lithologiques d'un modéle géologique**

(57) - Méthode pour modifier graduellement un modèle géologique représentatif d'un réservoir souterrain de façon à respecter des proportions moyennes fixées de ces faciès lithologiques.
- On sélectionne un groupe de faciès, appelé sélection, et un sous-groupe de faciès, appelé association. On définit un paramètre de transformation par le rapport entre les proportions moyennes des faciès de l'association et celles de la sélection. Dans le cadre d'un calage d'histo-rique, on mesure une différence entre des valeurs de données dynamiques mesurées et des valeurs calculées à l'aide d'un simulateur d'écoulement à partir du modèle géologique. On utilise un algorithme d'optimisation, pour en déduire une nouvelle valeur du paramètre de transformation qui minimise cette différence et on applique cette transformation aux faciès lithologiques de la sélection. La modification peut être appliquée sur l'ensemble du modèle ou sur une zone donnée.

**Fig. 1**

**Description**

La présente invention concerne un domaine technique de l'industrie pétrolière : la modélisation géologique de réservoir pétrolier.

Plus particulièrement, l'invention concerne une méthode pour modifier graduellement un modèle géologique représentatif d'un réservoir souterrain de façon à respecter des proportions moyennes fixées de ces faciès lithologiques.

L'invention peut ainsi être directement appliquée au calage d'historique (« history matching ») d'un modèle géologique. L'objectif d'un tel calage est d'ajuster certains paramètres d'un modèle géologique de réservoir de façon à reproduire des données dynamiques mesurées sur le terrain. Il peut s'agir de données de production ou de données issues de sismiques répétées (4D).

L'optimisation et l'exploitation des gisements pétroliers reposent sur une description aussi précise que possible de la structure et des propriétés pétrophysiques du gisement étudié. Pour ce faire, les spécialistes utilisent un outil qui permet de rendre compte de ces deux aspects de façon approchée : le modèle géologique. Un modèle géologique a donc pour vocation de rendre compte, au mieux, de la structure et des propriétés pétrophysiques d'un gisement. Le modèle géologique est constitué de différents éléments : un maillage qui constitue l'ossature du gisement et qui doit être représentatif de la structure, et des cartes tri ou bidimensionnelles de propriétés pétrophysiques associées à ce maillage et qui doivent être représentatives du comportement statique ou dynamique du gisement.

Dans le cadre de la modélisation géologique de réservoir pétrolier, la modélisation géostatistique est de plus en plus utilisée. Afin de prédire le comportement dynamique d'un gisement en production, des simulations numériques d'écoulement sont réalisées à partir du modèle géologique. Pour réduire les incertitudes et obtenir un modèle représentatif de la réalité, le modèle géologique doit être conditionné par l'ensemble des données disponibles. Pour appliquer ce type de modélisation en intégrant différentes sources de données, on paramètre le modèle, c'est-à-dire que l'on définit des paramètres, que l'on appelle « paramètres de calage du modèle ». A titre d'exemple, les paramètres de calage peuvent être les propriétés pétrophysiques moyennes des faciès (perméabilité, porosité, etc.), des propriétés géostatistiques telles que certains paramètres du variogramme (portée, direction d'anisotropie, etc.) ou les coefficients des lois liant certaines propriétés (rapport d'anisotropie verticale, loi porosité/perméabilité, etc.).

La prise en compte des données statiques à l'aide de ce type de modélisation est bien connue. Elle permet de construire des modèles géologiques détaillés, appelés alors modèles géostatistiques, représentant au mieux l'ensemble des données statiques disponibles. Grâce à cette technique, les données de puits, les données de sismique et les observations géologiques (analogues, etc.) peuvent être intégrées dans un modèle géologique cohérent en tenant compte des incertitudes. Les données de puits permettent de contraindre localement les modélisations géostatistiques par des observations de faciès ou par des propriétés pétrophysiques mesurées (porosité, perméabilité, etc.). Les données de sismique sont utilisées pour caractériser la structure du réservoir. Dans certains cas, une analyse des attributs sismiques peut être réalisée pour définir les variations spatiales des proportions de faciès, de façon à introduire une contrainte non stationnaire dans le processus de modélisation géostatistique.

La prise en compte des données dynamiques requiert une méthodologie adaptée pour modifier les modèles issus de modélisations géostatistiques appliquées aux données statiques. Cette étape consistant à ajuster un modèle existant pour qu'il soit cohérent avec des données dynamiques, est appelée « calage d'historique ». Ce processus de calage doit permettre d'ajuster certains paramètres du modèle géostatistique en conservant la cohérence avec les données statiques et les propriétés géostatistiques.

**État de la technique**

De nombreuses techniques de calage ont été développées au cours des dernières années pour paramétrer puis ajuster les modèles géostatistiques aux données dynamiques. Il s'agit de modifier itérativement le modèle géostatistique initial jusqu'à ce que le comportement dynamique simulé reproduise les données dynamiques collectées. Ce problème se résout en minimisant une fonction objectif qui quantifie la différence entre les données dynamiques et les réponses correspondantes simulées.

On connaît des techniques de calage des données de production visant à préserver la structure spatiale du modèle géologique tout au long du processus de minimisation. En d'autres termes, il est possible de modifier les propriétés pétrophysiques attribuées aux mailles d'un modèle (un modèle est constitué d'un ensemble de mailles ayant chacune des coordonnées spatiales bien définies et relatives au réservoir modélisé) sans corrompre les propriétés statistiques globales de ces propriétés. On peut citer par exemple la méthode des points pilotes qui permet de modifier le modèle géologique localement autour des points pilotes :

RamaRao, B.S., LaVenue, A.M., Marsilly, G. de, et Marietta, M.G., 1995, "Pilot point methodology for automated calibration of an ensemble of conditionally simulated transmissivity fields. 1. Theory and computational experiments", WRR, 31(3), 475-493.

On connaît également la méthode des déformations graduelles, décrite dans les documents suivants: FR-2,780,798 (US 6.618.695), FR-2,795,841 (US 6.813.565), FR-2,821,946(US 7.151.845), FR 2.846.767 (US 2004/0138862) et FR 2.851.670 (US 2006/0149520). Cette méthode permet de perturber une réalisation géostatistique d'une fonction aléatoire (c'est à dire une image possible du modèle de réservoir) à partir d'un nombre réduit de paramètres tout en préservant la structure spatiale de cette même réalisation. L'avantage de cette méthode est qu'elle permet de modifier la réalisation globalement ou localement. Lorsque la déformation graduelle est globale, on considère un jeu de coefficients de déformation qui tous s'appliquent de la même manière à l'ensemble des mailles du modèle. Lorsque la déformation graduelle est locale, des jeux de coefficients de déformation sont affectés à des zones du modèle et toutes les mailles d'une même zone sont identiquement affectées par le jeu de coefficient correspondant. Dans le cas d'une simulation en faciès, les déformations graduelles conduisent à modifier la distribution spatiale des hétérogénéités (décrites par la position spatiale des faciès), tout en respectant les propriétés géostatistiques moyennes (variogramme et proportions de faciès). Les déformations graduelles peuvent s'appliquer sur l'ensemble du modèle ou de façon régionale.

Cependant, le changement de réalisation géostatistique ou des propriétés pétrophysiques ne suffit pas toujours à expliquer à lui seul les données dynamiques. Les proportions moyennes de faciès peuvent en particulier avoir un impact majeur sur le comportement dynamique du champ. Ces données de proportions peuvent être globales sur l'ensemble du réservoir dans le cas d'un modèle stationnaire (proportion moyenne de sables par exemple), ou déterminer les tendances ou variations spatiales dans le cas de modèles non stationnaires. Les proportions initiales sont en général déterminées à partir des données de puits et/ou de données de sismique. Elles peuvent être entachées d'incertitudes, aussi bien dans leurs valeurs globales que dans les tendances spatiales.

Un objet de l'invention concerne une méthode permettant de modifier graduellement un modèle géologique en transformant localement ou globalement les proportions de faciès lithologiques, afin de contraindre ce modèle géologique par des données dynamiques dans un processus de calage d'historique par exemple.

**La méthode selon l'invention**

Ainsi, l'invention concerne une méthode pour modifier graduellement un modèle géologique représentatif d'un réservoir souterrain et constitué d'un ensemble de mailles renseignées en faciès lithologiques, de façon à respecter des proportions moyennes fixées de ces faciès lithologiques, ces proportions moyennes étant calculées en moyennant des proportions de faciès sur au moins une zone géographique du réservoir. La méthode comporte les étapes suivantes :

- on définit la zone géographique du réservoir en sélectionnant un ensemble de mailles du modèle géologique ;

- on regroupe $p$ faciès lithologiques dans un premier groupe de faciès ;

- au sein de ce premier groupe, on regroupe $q$ faciès lithologiques dans un second groupe de faciès ;

- on définit un paramètre de transformation par le rapport $R_g$ de la proportion moyenne $X_{a,g}$ des faciès du second groupe sur la proportion moyenne $X_{s,g}$ des faciès du premier groupe ;

- on transforme les proportions de faciès lithologiques du second groupe et de son complémentaire dans le premier groupe, en chaque maille de la zone géographique, de façon à imposer une valeur fixée au rapport $R_g$ ; et

- on simule un nouveau modèle géologique contraint par les proportions de faciès lithologiques modifiées.

Les proportions de faciès lithologiques du second groupe peuvent être transformées en appliquant une transformation du type :

$$\forall k \in F_s, \qquad p^k(m) = \alpha(m,k).p^{k,0}(m)$$

avec:

- $k$ un faciès appartenant à l'ensemble des $p$ faciès lithologiques du premier groupe de faciès,

- $p^k(m)$, la proportion du faciès $k$ dans une maille $m$ après transformation

- $p^{k,0}(m)$, la proportion du faciès $k$ dans une maille $m$ avant transformation

- $\alpha(m,k)$, un coefficient fonction du paramètre de transformation $R_g$ et des proportions de faciès avant transformation. Pour la simulation du nouveau modèle géologique on peut avantageusement utiliser une méthode de simulation par gaussiennes seuillées.

Selon l'invention on peut contraindre les valeurs moyennes de proportions à l'aide d'une technique de krigeage, ce qui procure une continuité entre la zone subissant des transformations et l'extérieur de la zone où aucune transformation n'est appliquée.

La méthode permet d'appliquer successivement plusieurs transformations. On peut par exemple modifier le contraste entre les faciès lithologiques en appliquant au modèle géologique une transformation en puissance définie comme suit :

$$\forall m \in Zone, \forall k \in Facies, \quad p^{k,final}(m) = \frac{(p^k(m))^\beta}{\sum_{i \in Facies}(p^i(m))^\beta}$$

où :

*Facies* :     ensemble des faciès lithologiques du modèle géologique.

*Zone* :     une zone du domaine définie par l'utilisateur et correspondant à un ensemble de mailles.

$p^k(m)$ :     proportion locale du faciès $k$ dans la maille $m$

$p^{k,final}(m)$ :     proportion du faciès $k$ dans la maille m après application de ladite transformation en puissance.

$\beta$ :     paramètre de contraste, nombre réel compris entre 0 et 1.

Enfin, selon l'invention, la méthode peut être appliquer au calage d'un modèle géologique d'un réservoir souterrain de façon à reproduire des données dynamiques mesurées, ce modèle étant constitué d'un ensemble de mailles renseignées en faciès lithologiques. Selon une telle application, on mesure une différence entre les valeurs de données dynamiques mesurées et des valeurs de données dynamiques simulées à l'aide d'un simulateur d'écoulement appliqué au modèle géologique. Puis on modifie graduellement le modèle géologique de façon à minimiser cette erreur.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 est un schéma illustrant les étapes de la méthode de calage d'historique selon l'invention.

- La figure 2 illustre le principe de la méthode des gaussiennes seuillées.

- La figure 3 illustre un modèle géologique initial (à gauche) et une définition de régions chenaux et levées (à droite).

- La figure 4 représente la distribution spatiale des faciès sur le modèle réservoir avant et après calage des proportions de faciès pour les couches 1 et 2.

- La figure 5 représente la distribution spatiale des faciès sur le modèle réservoir avant et après calage des proportions de faciès pour les couches 3 et 4.

**Description détaillée de la méthode**

Un objet de l'invention concerne une méthode permettant de réaliser un calage d'un modèle géologique par rapport à des données dynamiques en modifiant localement ou globalement les proportions de faciès lithologiques.
On appelle faciès lithologique une propriété d'une roche. Par exemple, le faciès lithologique peut se référer à la nature géologique de la roche (argile ; grès ; calcaire...), à son type de porosité (roche non consolidée et très poreuse;

roche peu poreuse...), à la nature du fluide piégé dans sa porosité (saumure ; huile ; gaz...).

On appelle modèle géologique une carte (représentation en deux dimensions) ou un cube (représentation en trois dimensions) constitué de mailles associées à des propriétés liées à un réservoir souterrain étudié. Un tel modèle rend compte également des caractéristiques structurales de ce réservoir.

La méthode est décrite à travers un exemple particulier de réalisation concernant le calage d'historique des données de production, mesurées au niveau de puits producteurs d'hydrocarbures.

De nos jours, les boucles de calage d'historique se résument comme suit. Tout d'abord, un modèle géologique représentatif d'un réservoir pétrolier est élaboré à une échelle fine. Ce modèle respecte les données statiques, c'est-à-dire les données qui ne dépendent pas des mouvements de fluide au sein du réservoir modélisé. Puis, ce modèle géologique est transféré vers une échelle grossière, appelée « échelle réservoir ». Ces notions d'échelles sont parfaitement connues des spécialistes. On obtient alors un modèle, dit modèle de réservoir sur lequel on effectue des simulations numériques d'écoulement à l'aide d'un simulateur d'écoulement, type de logiciel bien connu des spécialistes. Le passage à l'échelle du modèle de réservoir permet de réduire le nombre de mailles par rapport au modèle géologique fin. De fait, le temps CPU requis pour une simulation d'écoulement devient acceptable en pratique. La simulation d'écoulement fournit des données de production simulées, qui sont alors comparées aux données de production effectivement mesurées. Si l'écart entre les données dynamiques simulées et les données dynamiques mesurées est suffisamment faible, le processus de calage s'arrête. Dans le cas contraire, on revient au modèle géologique fin que l'on modifie de façon à améliorer le calage des données de production. Le processus itératif est alors répété jusqu'à ce que le calage soit jugé satisfaisant.

Selon la méthode, on intègre à cette boucle de calage d'historique classique une paramétrisation adaptée permettant d'ajuster les proportions de faciès lithologiques du modèle géologique d'un réservoir souterrain de façon à reproduire des données dynamiques mesurées sur le terrain. Ces données dynamiques peuvent être des données de production ou des données issues de sismiques répétées (4D).

Selon l'invention, on dispose d'un modèle géologique initial décrivant le réservoir étudié en faciès. De nombreuses techniques permettant de construire un modèle géologique contraint sont connues des spécialistes. On peut par exemple citer une technique de modélisation non stationnaire appelée simulation par gaussiennes seuillées. Cette technique est décrite dans le document suivant :

- Le Loc'h G. and Galli A., 1997 : Truncated plurigaussian method : theoretical and practical points of view. In : Geostatistics Wollongong'96, E.Y. Baafi and N.A Schofield eds, Kluwer, p.211-222

Selon l'invention, chacune des mailles du modèle géologique est renseignée au moins par les valeurs de proportions de faciès lithologiques, par exemple : 15% de sable, 30% de grès, 5% d'argile, etc. Les proportions de faciès peuvent être identiques sur toutes les mailles d'une couche du modèle (on parle alors d'un modèle stationnaire) ou être variables d'une maille à une autre (cas d'un modèle non stationnaire). Ces proportions initiales de faciès géologiques peuvent être déterminées à partir des données de puits et/ou d'attributs ou de données sismiques. Une telle étape est bien connue des spécialistes et l'on peut citer par exemple les documents suivants :

- Doligez B., Fournier F., Jolivet G., Gancarski S., Beucher H., 2002 : Seismic facies map integration in geostatistical geological model: a field case. EAGE, conference & technical exhibition of European Association of Geoscientists & Engineers, 64th, Florence, 27-30 May 2002, Extended abstracts, Vol. 2, P215-219.

- Barens L., Biver P., 2004 : Reservoir Facies Prediction from Geostatistical Inverted Seismic Data, Abu Dhabi International Conference and Exhibition, 10-13 October, SPE 88690-MS.

- la demande de brevet française FR 06/10.792.

A partir des proportions de faciès et des données de puits, une technique de simulation géostatistique, telle que la méthode des gaussiennes seuillées, est utilisée pour générer une ou plusieurs réalisations de distributions de faciès lithologiques sur le maillage géologique. Pour chaque réalisation, la probabilité de simulation d'un faciès lithologique sur une maille est conditionnée par les données de proportions de faciès. De façon avantageuse ce modèle géologique est également renseigné en propriétés pétrophysiques (porosité, perméabilité, ...), qui sont assignées aux faciès lithologiques.

Le réservoir pétrolier est équipé de puits pour lesquels on connaît des données de production, à partir desquelles on souhaite caler le modèle géologique.

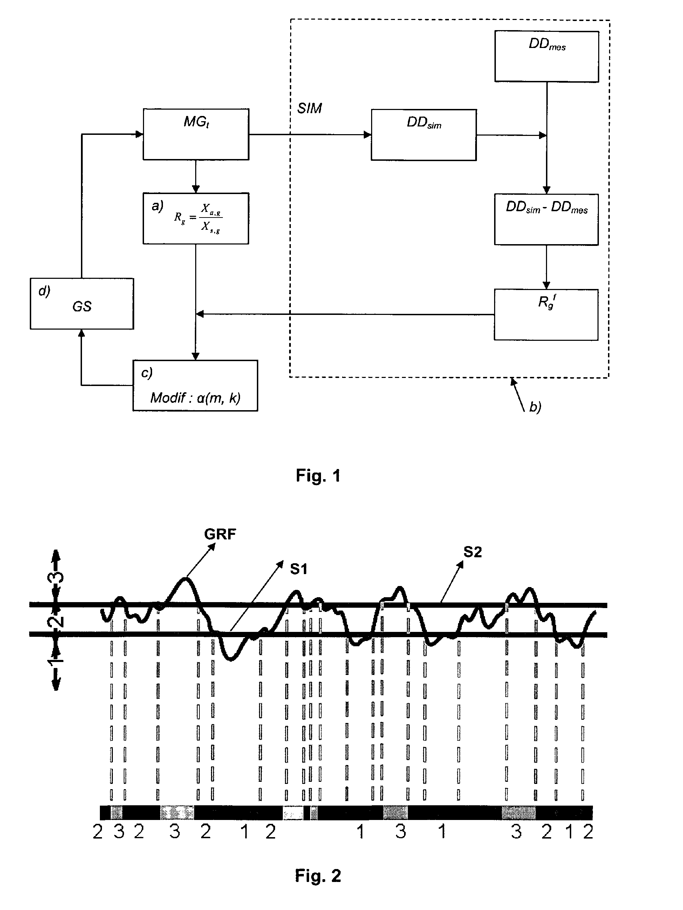

Partant d'un modèle géologique initial ($MG_i$), la méthode comporte principalement les étapes suivantes (figure 1) :

a) on définit un paramètre de transformation ($R_g$) des proportions moyennes de faciès lithologiques ;

b) on détermine la valeur que doit avoir ce paramètre pour que le modèle cale au mieux aux données de production. Dans le cadre du calage d'historique ceci est réalisé à l'aide d'un simulateur d'écoulement (*SIM*), type de logiciel bien connu des spécialistes. A partir d'un modèle géologique représentatif du gisement réel, un tel simulateur permet de calculer une prédiction des données de production ($DD_{sim}$). Si l'on modifie le modèle, et notamment les proportions de faciès, la réponse, c'est-à-dire la simulation des données de production, est différente. On peut ainsi, en comparant les données de production simulées et celles mesurées ($DD_{mes}$), déterminer une valeur du paramètre de transformation, tel qu'une fois modifié, le modèle géologique offre une réponse plus proche de la réalité ;

c) on modifie (*Modif*) les proportions de faciès lithologiques du modèle géologique, de façon à ce que le paramètre ait la valeur de calage déterminée ;

d) on simule (*GS*) un nouveau modèle en faciès en fonction de ces nouvelles proportions.

Les étapes b) à d) peuvent être répétées à chaque boucle de calage telles que décrite précédemment.

Modification des proportions de faciès lithologiques d'un modèle géologique

La méthode décrite ci-après correspond aux étapes a) et c) du calage. Elle constitue un autre objet de l'invention qui concerne une méthode permettant de modifier les proportions de faciès lithologiques d'un modèle géologique de façon à respecter des proportions moyennes fixées de ces faciès lithologiques.

On appelle « proportions moyennes de faciès lithologiques », l'estimation globale des proportions sur un volume de discrétisation formé par un ensemble donné de mailles. On appelle « proportions locales de faciès lithologiques » les données de proportions dans un volume réduit à une maille du modèle.

La méthode propose de sélectionner un groupe de faciès, appelé sélection, et de contraindre dans cette sélection la proportion moyenne d'un sous-groupe de faciès, appelé association. Autrement dit, on sélectionne un groupe de faciès (la sélection), puis un sous-groupe (l'association) et on définit un paramètre par le rapport entre les proportions moyennes des faciès de l'association et celles de la sélection. Ce paramètre permet de modifier les proportions des faciès de la sélection, et ceci sur l'ensemble du modèle ou sur une zone donnée formée par un ensemble de mailles. Lorsque le modèle est stationnaire, la modification des proportions est appliquée de façon uniforme sur l'ensemble des mailles de la zone. Lorsque le modèle est non-stationnaire, les proportions de chaque maille sont modifiées en tenant compte des proportions locales initiales, de façon à respecter le paramètre de proportion moyenne.

La méthode propose également de définir un autre paramètre d'ajustement des proportions, appelé paramètre de contraste. Le principe de ce paramètre de contraste est d'agir sur la proportion du faciès lithologique le plus probable par rapport à la proportion des autres faciès. Ce paramètre de contraste peut également être appliqué à l'ensemble du modèle ou sur une zone correspondant à un ensemble de mailles. Une loi de modification en puissance est proposée ici, mais le principe de paramètre de contraste peut être étendu à d'autres lois.

Pour exposer de façon plus détaillée la méthode de modification des proportions de faciès, on introduit tout d'abord les notations et définitions suivantes :

*Facies :* ensemble des faciès lithologiques du modèle géologique.

*Zone* : une zone du domaine définie par l'utilisateur (que nous supposerons unique pour simplifier) et correspondant à un ensemble de mailles.

$p^k(m)$ : proportion « locale » du faciès $k$ dans la maille $m$.

$p_g^k$ : proportion moyenne du faciès $k$. Dans le cas stationnaire, les proportions moyennes et locales coïncident, et dans le cas non stationnaire :

$$p_g^{\ k} = \frac{1}{card(Zone)} \sum_{m \in zone} p^k(m)$$

*card(Zone)* est le cardinal de *Zone,* c'est-à-dire le nombre de mailles contenues dans la zone *Zone.*

$F_s$ : ensemble des faciès lithologiques contenus dans la sélection.

$F_a$ : ensemble des faciès lithologiques de l'association.

$X_{s,g}$ :  proportion moyenne de la sélection, $X_{s,g} = \sum p_g^k$

$X_{a,g}$ :  proportion moyenne de l'association $X_{a,g} = \sum_{k \in F_a} p_g^k$

$R_g$ :  rapport de proportion moyen $\dfrac{X_{a,g}}{X_{s,g}}$

$X_s(m)$ :  proportion locale de la sélection dans la maille m, $X_s(m) = \sum p^k(m)$

$X_a(m)$ :  proportion locale de l'association dans la maille $m$, $X_a(m) = \sum_{k \in F_a} p^k(m)$

$R(m)$ :  rapport de proportion local, $\dfrac{X_a(m)}{X_s(m)}$

$\beta$ :  paramètre de contraste correspondant à une loi en puissance (exposant des proportions de faciès)

Pour toutes ces notations, un exposant ° indique une valeur initiale, c'est-à-dire avant modification par la méthode.

La méthode proposée permet de contraindre la proportion moyenne des faciès associés dans la sélection en agissant sur le paramètre $R_g$. Toutes les proportions de faciès de la sélection sont affectées par cette contrainte, tout en gardant les proportions des faciès restants (i.e. hors sélection) inchangées. Cette méthode comporte principalement les étapes suivantes :

- on définit au moins une zone géographique du réservoir dans laquelle on souhaite modifier des proportions de faciès $p^k(m)$, en sélectionnant un ensemble de mailles du modèle géologique (la zone peut être étendue à l'ensemble du réservoir) ;
- on regroupe $p$ faciès lithologiques dans un premier groupe de faciès, appelé sélection ;
- au sein de ce premier groupe, on regroupe $q$ faciès lithologiques dans un second groupe de faciès, appelé association ;
- on définit un paramètre de transformation par le rapport $R_g$ de la proportion moyenne $X_{a,g}$ des faciès du second groupe sur la proportion moyenne $X_{s,g}$ des faciès du premier groupe :

$$R_g = \frac{X_{a,g}}{X_{s,g}}$$

On calcule $R_g^0$ pour le modèle initial. Puis on fixe une valeur à respecter : $R_g = R_g^f$.

- on modifie les proportions de faciès lithologiques de l'association ($F_a$), et de son complémentaire dans la sélection ($F_s \setminus F_a$), en chaque maille de la zone géographique et au prorata des proportions initiales $p^{k,0}(m)$, de façon à satisfaire le rapport $R_g^f$.

La valeur $R_g^f$ peut être définie en fonction de données additionnelles (données de puits, interprétation de tests de puits, contrainte géologique, contrainte sismique, etc.) ou dans le processus itératif de calage d'historique.

*Cas stationnaire*

Dans un cas stationnaire, les proportions de faciès $p^k(m)$ sont identiques en tout point de la grille. Par conséquent : $p_g^k = p^k(m)$.

En notant $A = \dfrac{R_g}{R_g^0}$ et $B = \dfrac{1 - R_g}{1 - R_g^0}$, on modifie les proportions de faciès de l'association, et de son complémentaire dans la sélection, de la façon suivante :

$$\forall k \in F_a , \qquad\qquad p^k(m) = p_g^k = A \times p_g^{k,0} \qquad\qquad \text{(Eq. 1)}$$

$$\forall k \in F_s \setminus F_a , \qquad\qquad p^k(m) = p_g^k = B \times p_g^{k,0} \qquad\qquad \text{(Eq. 2)}$$

Ainsi :  $X_a(m) = \sum_{k \in F_a} p^k(m) = \sum_{k \in F_a} A \times p_g^{k,0}$

Trois cas particuliers peuvent se produire :

- Si $X_{s,g}^0 = 0$, la transformation ne peut être appliquée et les proportions de faciès doivent rester inchangées.
- Si $R_g^0 = 1$, ceci signifie qu'initialement toutes les proportions des faciès de l'ensemble $X_s \setminus X_a$ sont nulles. Dans ce cas, la formule (Eq. 2) ne peut être appliquée et on supposera que les faciès du groupe $X_s \setminus X_a$ apparaissent en proportions identiques.
  Ainsi, dans ce cas :

$$\forall k \in F_a , \qquad\qquad p^k(m) = p_g^k = A \times p_g^{k,0} \qquad\qquad \text{(Eq. 1)}$$

$$\forall k \in F_s \setminus F_a , \qquad\qquad p^k(m) = p_g^k = \frac{(1 - R_g) X_{s,g}^0}{card(F_s \setminus F_a)} \qquad\qquad \text{(Eq. 2')}$$

- Si $R_g^0 = 0$, on procède de la même façon :

$$\forall k \in F_a , \qquad\qquad p^k(m) = p_g^k = \frac{R_g X_{s,g}^0}{card(F_a)} \qquad\qquad \text{(Eq. 1')}$$

$$\forall k \in F_s \setminus F_a , \qquad\qquad p^k(m) = p_g^k = B \times p_g^{k,0} \qquad\qquad \text{(Eq. 2)}$$

*Cas non stationnaire*

Dans un cas non stationnaire, la modification est analogue au cas précédent et préserve, dans une certaine mesure, la répartition locale des faciès observée initialement. En effet, la modification globale des proportions de faciès est distribuée localement en fonction des proportions initiales de chaque maille. Ainsi, en utilisant les mêmes notations :

$$\forall k \in F_a , \qquad\qquad p^k(m) = p^{k,0}(m) + A_{loc} \times \frac{p^{k,0}(m)}{X_a^0(m)} , \qquad\qquad \text{(Eq. 3)}$$

$$\forall k \in F_s \setminus F_a, \qquad p^k(m) = p^{k,0}(m) + B_{loc} \times \frac{p^{k,0}(m)}{X_s^0(m) - X_a^0(m)}, \qquad \text{(Eq. 4)}$$

avec :

$$A_{loc} = \begin{cases} (A-1)X_a^0(m), & si \quad R_g \le R_g^0 \quad et \quad R_g^0 \neq 0, \\ -(B-1)(X_s^0(m) - X_a^0(m)), & \sin on. \end{cases}$$

$$B_{loc} = -A_{loc}$$

Comme pour le cas stationnaire, la transformation ne peut être appliquée lorsque $X_{s,g}^0 = 0$. Remarquons que les grandeurs $A_{loc}$ et $B_{loc}$ sont toujours bien définies, y compris pour $R_g^0 = 0$ et $R_g^0 = 1$. Localement, des cas particuliers peuvent apparaître. En effet,
pour $X_s^0(m) = 0$, les proportions de faciès doivent rester inchangées pour la maille m,

pour $X_a^0(m) = 0$, alors $\forall k \in F_a$, $p^k(m) = \dfrac{A_{loc}}{card(F_a)}$,

pour $X_s^0(m) = X_a^0(m)$, alors $\forall k \in F_s \setminus F_a$, $p^k(m) = \dfrac{B_{loc}}{card(F_s \setminus F_a)}$.

En somme, quelque soit le cas, on transforme les proportions de faciès lithologiques de l'association, en appliquant une transformation du type :

$$\forall k \in F_s, \qquad p^k(m) = \alpha(m,k).p^{k,0}(m)$$

avec:

- $p^k(m)$, la proportion du faciès $k$ dans une maille m après transformation,

- $p^{k,0}(m)$, la proportion du faciès $k$ dans une maille m avant transformation,

- $\alpha(m,k)$, un coefficient fonction du paramètre de transfom-iation $R_g$ et des proportions de faciès initiales.

Ainsi, à l'aide d'un seul paramètre global $R_g$, on parvient à modifier les proportions locales des faciès de la sélection sur l'ensemble de la zone à modifier.
Quelque soit le cas, la méthode permet de tenir compte des données observées aux puits (données conditionnantes) : les mailles traversées par des puits sont exclues de la zone de transformation et les faciès observés leur sont directement attribués.
Les transformations définies ci-dessus peuvent être appliquées sur des régions préalablement définies par un ensemble de mailles (transformation régionale) ou sur l'ensemble du modèle (transformation globale, la région est le modèle complet). Dans le cas de transformations régionales, on définit une zone particulière du réservoir dans laquelle on souhaite modifier les proportions de faciès. Ces proportions moyennes de faciès sont calculées de façon indépendante sur chaque région. La méthode de transformation n'affecte que les proportions de faciès de la zone considérée.
Selon un autre mode de réalisation, on utilise un second paramètre de transformation, appelé paramètre de contraste, pour calculer les proportions de faciès finales sur l'ensemble des mailles du modèle géologique. Ce paramètre de contraste permet d'accentuer ou de réduire la probabilité d'apparition des faciès lithologiques dont la probabilité est dominante. Dans un processus de simulation géostatistique, un paramètre de contraste élevé se traduira par des réalisations géostatistiques se rapprochant du faciès le plus probable. A l'inverse, un paramètre de contraste faible tendra vers une apparition équiprobable de faciès sur un ensemble de réalisations indépendantes, se traduisant par des proportions également réparties entre faciès.

Pour faire varier le contraste entre les faciès, une transformation en puissance peut être appliquée, avec la formulation suivante :

$$\forall m \in Zone, \forall k \in Facies, \quad p^{k,final}(m) = \frac{(p^k(m))^\beta}{\sum_{i \in Facies}(p^i(m))^\beta}$$

Le paramètre $\beta$ est le paramètre de contraste, il s'agit d'un nombre réel compris entre 0 et 1. Il permet d'accentuer la proportion des faciès les plus représentés par des valeurs d'exposant supérieures à un. Lorsque le paramètre est inférieur à un, l'influence du faciès le plus représenté est diminuée et on tend vers des proportions également réparties de faciès pour des valeurs faibles. Lorsque le paramètre vaut un, les proportions initiales sont inchangées. Les nouvelles valeurs obtenues sont normalisées pour que la somme des proportions transformées soit unitaire.

Ce paramètre de contraste peut être appliqué, de façon globale ou par régions, une fois toutes les autres transformations effectuées ou bien avant les autres transformations.

Dans le cas où les proportions de faciès initiales sont déterminées à partir d'attributs ou de données sismiques, l'augmentation du paramètre de contraste permet d'accentuer l'impact de la contrainte sismique par rapport aux réalisations aléatoires. A l'extrême, un paramètre de contraste très élevé se traduira par des réalisations déterministes, correspondant à la distribution du faciès le plus probable.

Modification des faciès lithologiques d'un modèle géologique

La méthode décrite ci-après correspond à l'étape d) du calage. Elle constitue un autre objet de l'invention qui concerne une méthode permettant de modifier graduellement un modèle géostatistique en modifiant localement ou globalement les proportions de faciès lithologiques. La méthode comporte principalement les étapes suivantes :

- on définit au moins une zone géographique du réservoir dans laquelle on souhaite modifier des proportions de faciès $p^k(m)$, en sélectionnant un ensemble de mailles du modèle géologique ;

- on modifie des proportions de faciès lithologiques en appliquant la méthode précédente de modification des proportions de faciès lithologiques, et notamment en modifiant les proportions de faciès lithologiques d'une association ($F_a$), et de son complémentaire dans sa sélection ($F_s \setminus F_a$), en chaque maille de la zone géographique, de façon à imposer une valeur fixée au paramètre de transformation $R_g$. Un paramètre de contraste peut également être appliqué ;

- on simule un nouveau modèle géologique contraint par lesdites proportions de faciès lithologiques modifiées.

De préférence on utilise une méthode de simulation qui permet de conférer à cette transformation un caractère graduel et continu.

On peut par exemple utiliser une simulation basée sur les gaussiennes seuillées déjà citée. En effet cette méthode consiste à générer une réalisation gaussienne d'une fonction aléatoire. Cette réalisation gaussienne d'une variable continue est transformée en catégories, correspondant aux faciès lithologiques, en la tronquant par des valeurs de seuils. Les seuils définissent des intervalles d'appartenance à un faciès lithologique. La figure 2 illustre le principe de cette méthode des gaussiennes seuillées. Elle montre une réalisation gaussienne 1D d'une fonction aléatoire (*GRF*) et deux seuils (*S1* et *S2*) permettant de définir trois faciès (1, 2 et 3). Ainsi à chaque valeur simulée sur une grille, on peut faire correspondre un faciès. Les seuils sont définis en fonction des proportions de faciès lithologiques. Un intervalle entre 2 seuils est faible si le faciès correspondant à une faible proportion. En d'autres termes, ces proportions permettent de déduire la « position » des seuils. Selon la méthode on modifie les proportions de faciès. On modifie donc la position des seuils. En réalisant une simulation par la méthode des gaussiennes seuillées on obtient un nouveau modèle en faciès. Comme la réalisation gaussienne est une variable continue, si l'on déplace graduellement un seuil, la modification de la distribution de faciès est nécessairement graduel.

Selon un mode particulier de réalisation, plusieurs transformations peuvent être appliquées successivement de façon à introduire différents paramètres de calage. Ces transformations peuvent être différentes.

Cette méthode est peu coûteuse en temps de calcul, mais elle ne tient pas compte des données de contraintes de continuités pour modifier la répartition des proportions de faciès : les transformations des proportions sont effectuées indépendamment les unes des autres sur chaque région. Notons cependant que la continuité des réalisations en faciès est maintenue du fait qu'un variogramme est appliqué dans le processus de simulation géostatistique. Lorsqu'une continuité doit être maintenue sur la répartition des proportions de faciès, une approche par krigeage peut être avantageusement combinée, de façon à lisser les transformations et assurer une continuité entre régions. Dans ce cas, la technique de krigeage permet de contraindre les valeurs moyennes de proportions par région, tout en gardant une évolution progressive de la transformation déterminée par un variogramme. Pour ce faire, on procède comme suit.

En fonction de la transformation choisie (par l'utilisateur), on calcule les valeurs $R^0(m)$ en chaque maille m du modèle y compris en dehors de la zone de transformation. On considère cette fonction discrète $R^0$ comme une première distribution que l'on conditionne ensuite aux puits en fonction des faciès observés mais aussi sur la zone de transformation en imposant une valeur moyenne $R_g^f$ rentrée par l'utilisateur ou déduite d'une optimisation. On obtient alors une seconde distribution $R_{cond}$. Aux puits les valeurs de $R_{cond}$ sont égales à 1 ou 0 si le faciès observé appartient à l'ensemble $F_a$ ou $F_s \setminus F_a$. Il peut aussi arriver que ce faciès ne soit pas présent dans la sélection, dans ce cas, $R_{cond}$ n'est pas définie, on ne cherchera donc pas à conditionner $R_{cond}$ en ce point. Le conditionnement peut être réalisé à l'aide d'un algorithme de krigeage simple où des données de variogramme doivent être spécifiées en plus des données relatives aux transformations. Le conditionnement par krigeage est une technique parfaitement connue des spécialistes. Le krigeage simple et le krigeage par bloc sont, en particulier détaillés dans :

P. Goovaerts : Geostatistics for Natural Resources Evaluation, Oxford University Press, 1997, pp. 125-185.

A partir des nouvelles valeurs $R_{cond}(m)$, on recalcule les proportions des faciès de la sélection en chaque maille du modèle de la façon suivante :

$$\bullet \quad \forall k \in F_a, \qquad p^k(m) = A(m) \times p^{k,0}(m), \text{ avec } A(m) = \frac{R_{cond}(m)}{R^0(m)} ;$$

$$\bullet \quad \forall k \in F_s \setminus F_a, \quad p^k(m) = B(m) \times p^{k,0}(m), \text{ avec } B(m) = \frac{1 - R_{cond}(m)}{1 - R^0(m)} .$$

Des cas particuliers apparaissent aux mailles $m$ où $X_s^0(m) = 0$, $R^0(m)=1$ ou encore $R^0(m) = 0$ . Ces cas particuliers peuvent être résolus d'une façon analogue au cas stationnaire.

Exemple d'application

L'exemple d'application présenté dans cette section est basé sur un modèle synthétique de réservoir, représentant une simulation de test de puits dans un chenal. Un modèle initial est construit à l'aide d'une simulation géostatistique par la méthode des gaussiennes seuillées. Les proportions de faciès initiales, qui peuvent être issues de données de sismique 3D, donnent les tendances principales de répartition spatiale des faciès. Le modèle réservoir est supposé décrit avec quatre faciès, qui sont par ordre de qualités réservoir croissantes : "argiles" (F1), "argiles laminées" (F2), "sables laminés" (F3) et "sables" (F4). Les faciès "argiles" et "argiles laminés" (F1+F2) sont présents dans les régions levées, et les faciès "sables laminés" et "sables" (F3+F4) dans les chenaux. Les proportions moyennes d'argiles laminées dans les levées et de sables dans les chenaux sont entachées d'une marge d'incertitude que l'on cherche à réduire en contraignant les proportions moyennes par les données de tests de puits.

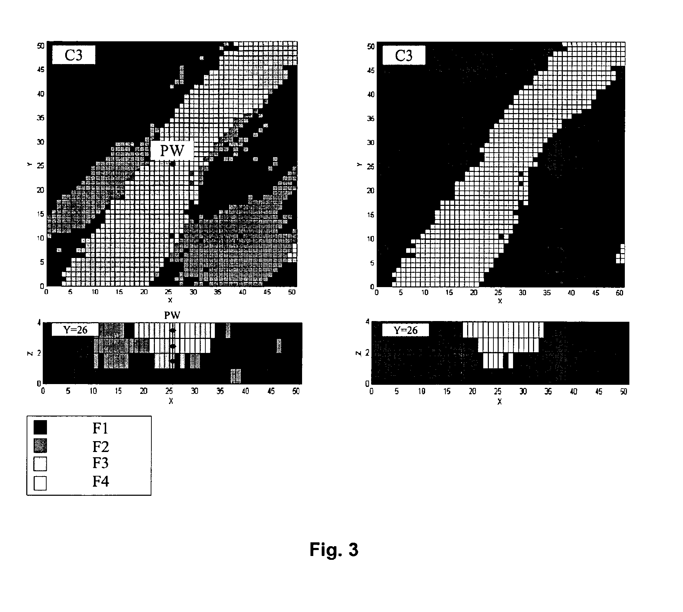

Le modèle géologique initial, donné par la distribution spatiale des faciès, est présenté sur la Figure 3. Le modèle géologique initial est présenté à gauche. Selon une vue de dessus (axes X et Y) pour un niveau C3 en haut de la figure 3, et selon une section verticale en fonction de la profondeur Z pour Y=26, en bas de la figure 3. On distingue la géométrie du chenal, dans lequel est implanté un puits de production (PW). Le puits est perforé sur l'ensemble de la hauteur du réservoir. La définition des régions chenaux et levées est présentée à droite de la figure 3. Les régions sont utilisées pour calculer et paramétrer les proportions moyennes de faciès en vue du calage des données de test de puits.

Les quatre faciès F1 à F4 sont représentés.

Les propriétés pétrophysiques (porosité et perméabilité) sont constantes par faciès. Les valeurs suivantes (Tableau 1) ont été adoptées pour les simulations d'écoulement :

Tableau 1 - Valeurs des propriétés pétrophysiques par faciès.

| Faciès | Porosité (adim) | Perméabilité horizontale (mD) | Rapport d'anisotropie verticale Kv/Kh (adim) |
|--------|-----------------|-------------------------------|----------------------------------------------|
| F1 | 0.02 | 10 | 0.1 |
| F2 | 0.08 | 50 | 0.1 |
| F3 | 0.15 | 300 | 0.1 |
| F4 | 0.25 | 800 | 0.1 |

Les régions chenaux et levées ont été délimitées à partir des faciès (Figure 3) : les régions levées correspondent à la présence de faciès F1 et F2, les régions chenaux à la présence de faciès F3 et F4. Ces régions sont utilisées pour paramétrer les proportions moyennes de faciès dans les chenaux et levées, en vue du calage de ces paramètres par les données de test de puits:

- un premier paramètre de transformation correspond à la proportion moyenne d'argiles laminées dans les levées:

$$\frac{\%F2}{\%(F1+F2)}$$

- un second paramètre de transformation correspond à la proportion moyenne de sables dans les chenaux:

$$\frac{\%F3}{\%(F3+F4)}$$

Un test de puits synthétique a été simulé à partir de proportions de faciès de référence dans un cadre non-stationnaire. Le modèle de référence a été généré avec les valeurs suivantes de paramètres de transformation : 0.46 pour le premier paramètre et 0.51 pour le second paramètre. Le test de puits (draw-down) est simulé sur une période de 100 heures, avec un débit constant de 650 m$^3$/jour. Les données synthétiques de tests de puits comprennent la différence de pression et sa dérivée. Pour le calage du test de puits, les valeurs initiales ont été fixées à 0.2 pour les deux paramètres de transformation, qui peuvent varier entre 0 et 1 au cours du calage. Le Tableau 2 ci-dessous synthétise les valeurs des paramètres de proportions pour le modèle de référence et pour le modèle initial. Les proportions de référence (colonne de droite) sont les valeurs utilisées pour générer les données synthétiques de test de puits. Les valeurs initiales constituent le point de départ de l'optimisation réalisée pour le calage du test de puits.

Tableau 2 - Définition et valeurs des paramètres de proportions moyennes de faciès.

| Région | Faciès de la sélection | Faciès de l'association | Proportions initiales des faciès de l'association au sein de la sélection | Valeurs des proportions de référence |
|--------|------------------------|-------------------------|-----------------------------|-------------------------|
| Levées | F1 + F2 | F2 | 0.2 | 0.46 |
| Chenaux | F3 + F4 | F4 | 0.2 | 0.51 |

Un algorithme d'optimisation, basé sur une méthode de gradients, a été mis en oeuvre pour caler le test de puits en ajustant les deux paramètres de proportions, en partant des valeurs initiales. L'algorithme réalise une minimisation itérative d'une fonction objectif du type moindres carrés, qui quantifie l'écart entre la simulation numérique du test de puits et les données. L'optimisation converge en 7 simulations et permet de retrouver des valeurs moyennes de proportions de faciès très proches des valeurs de référence: 0.453 pour le paramètre 1 (pour une valeur de référence de 0.46) et 0.509 pour le paramètre 2 (pour une valeur de référence de 0.51). Les valeurs optimales de paramètres permettent une très bonne restitution des données de test de puits.

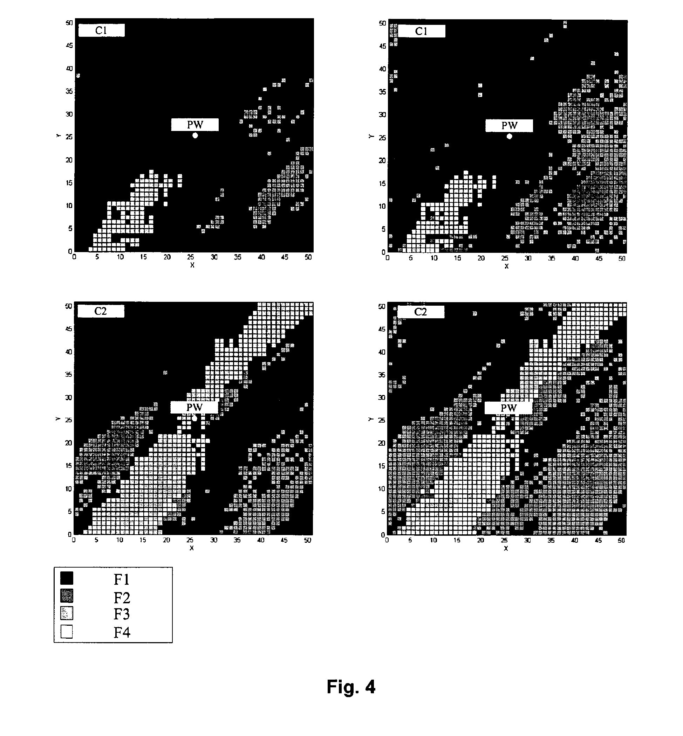

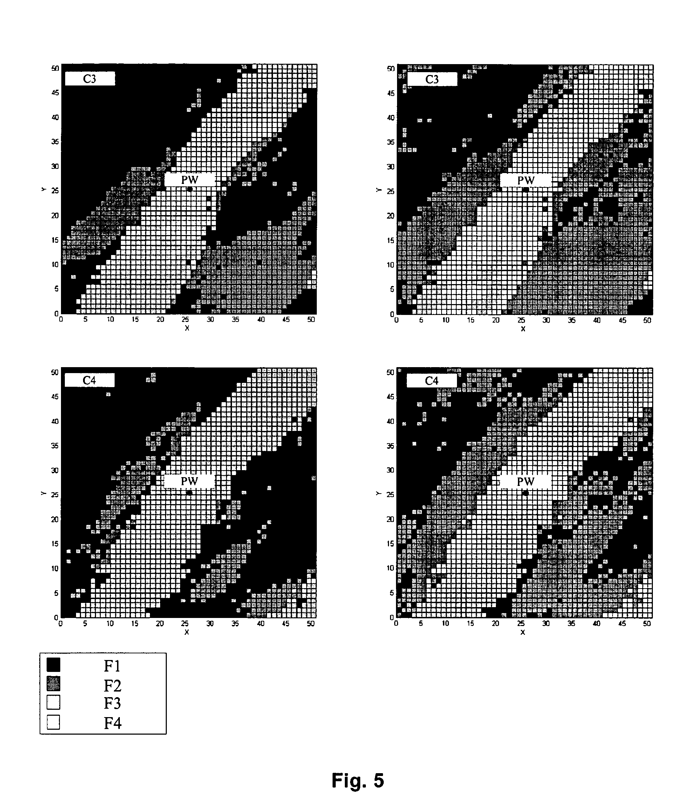

La Figure 4 et la Figure 5 montrent l'impact du calage des proportions de faciès sur le modèle géologique. La figure 4 montre la distribution spatiale des faciès sur le modèle réservoir avant et après calage des proportions de faciès. Les images de gauche représentent les couches 1 et 2 (C1, C2) obtenues avec les proportions initiales, les images de droite les mêmes couches avec les proportions finales. La figure 5 montre la distribution spatiale des faciès sur le modèle réservoir avant et après calage des proportions de faciès. Les images de gauche représentent les couches 3 et 4 (C3, C4) obtenues avec les proportions initiales, les images de droite les mêmes couches avec les proportions finales.

Le calage du test de puits a été réalisé en augmentant la proportion moyenne du faciès F2 (argiles laminées) dans les levées et la proportion moyenne de faciès F4 (sables) dans les chenaux. La répartition spatiale des faciès montre une étendue plus importante de ces faciès sur le modèle optimal par rapport au modèle initial.

On note que l'optimisation est réalisée sur une réalisation géostatistique fixée (germe figé au cours de l'optimisation). Il est également possible de caler simultanément les proportions de faciès et la réalisation en utilisant la méthode des déformations graduelles. Dans ce cas, le calage des proportions de faciès permet de modifier les tendances principales, tandis que la méthode des déformations graduelle permet de modifier la répartition locale des hétérogénéités à proportions fixées.

Cette méthodologie est donc complémentaire par rapport à la méthode des déformations graduelles : le calage des proportions de faciès introduit un contrôle sur les tendances spatiales moyennes tandis que les déformations graduelles agissent sur la distributions locale des hétérogénéités à proportions moyennes fixées.

**Revendications**

1.  Méthode pour modifier graduellement un modèle géologique représentatif d'un réservoir souterrain et constitué d'un ensemble de mailles renseignées en faciès lithologiques, de façon à respecter des proportions moyennes fixées de ces faciès lithologiques, lesdites proportions moyennes étant calculées en moyennant des proportions de faciès sur au moins une zone géographique du réservoir, **caractérisée en ce qu'**elle comporte les étapes suivantes :

    - on définit ladite zone géographique du réservoir en sélectionnant un ensemble de mailles dudit modèle géologique ;
    - on regroupe $p$ faciès lithologiques dans un premier groupe de faciès ;
    - au sein de ce premier groupe, on regroupe $q$ faciès lithologiques dans un second groupe de faciès ;
    - on définit un paramètre de transformation par le rapport $R_g$ de la proportion moyenne $X_{a,g}$ des faciès du second groupe sur la proportion moyenne $X_{s,g}$ des faciès du premier groupe ;
    - on transforme lesdites proportions de faciès lithologiques du second groupe et de son complémentaire dans le premier groupe, en chaque maille de la zone géographique, de façon à imposer une valeur fixée au rapport $R_g$ ; et
    - on simule un nouveau modèle géologique contraint par lesdites proportions de faciès lithologiques modifiées.

2.  Méthode selon la revendication 1, dans laquelle on transforme lesdites proportions de faciès lithologiques du second groupe, en appliquant une transformation du type :

$$\forall k \in F_s, \qquad p^k(m) = \alpha(m,k).p^{k,0}(m)$$

    avec:

    - $k$ un faciès appartenant à l'ensemble des $p$ faciès lithologiques dudit premier groupe de faciès,
    - $p^k(m)$, la proportion du faciès $k$ dans une maille m après transformation,
    - $p^{k,0}(m)$, la proportion du faciès $k$ dans une maille m avant transformation,
    - $\alpha(m,k)$, un coefficient fonction du paramètre de transformation $R_g$ et des proportions de faciès avant transformation.

3.  Méthode selon l'une des revendications 1 et 2, dans laquelle on simule un nouveau modèle géologique par la méthode des gaussiennes seuillées.

4.  Méthode selon l'une des revendications 1 à 3, dans laquelle on contraint les valeurs moyennes de proportions à l'aide d'une technique de krigeage.

5.  Méthode selon l'une des revendications précédentes, dans laquelle on applique successivement plusieurs transformations.

**6.** Méthode selon la revendication 5, dans laquelle on modifie un contraste entre lesdits faciès lithologiques en appliquant au modèle géologique une transformation en puissance définie comme suit :

$$\forall m \in Zone, \forall k \in Facies, \quad p^{k,final}(m) = \frac{(p^k(m))^\beta}{\sum_{i \in Facies}(p^i(m))^\beta}$$

*Facies* : ensemble des faciès lithologiques du modèle géologique.
*Zone* : une zone du domaine définie par l'utilisateur et correspondant à un ensemble de mailles.
$p^k(m)$ : proportion locale du faciès *k* dans la maille m.
$p^{k,final}(m)$ : proportion du faciès *k* dans la maille *m* après application de ladite transformation en puissance.
β : paramètre de contraste, nombre réel compris entre 0 et 1.

**7.** Application au calage d'un modèle géologique d'un réservoir souterrain de façon à reproduire des données dynamiques mesurées, dans laquelle on mesure une différence entre lesdites valeurs de données dynamiques mesurées et des valeurs de données dynamiques simulées à l'aide d'un simulateur d'écoulement appliqué audit modèle géologique, et l'on modifie graduellement ledit modèle géologique selon l'une des revendications précédentes, de façon à minimiser ladite erreur.

Fig. 1

Fig. 2

**Fig. 3**

**Fig. 4**

Fig. 5

**Office européen des brevets**

# RAPPORT DE RECHERCHE EUROPEENNE

Numéro de la demande

EP 08 29 0286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 760 492 A (INST FRANCAIS DU PETROLE [FR]) 7 mars 2007 (2007-03-07) * alinéas [0009] - [0011], [0028] - [0032], [0034], [0035], [0042] - [0047] * | 1,7 | INV. G01V11/00 G01V1/30 |
| Y | US 2006/052938 A1 (THORNE JULIAN A [US] ET AL THORNE JULIAN ARTHUR [US] ET AL) 9 mars 2006 (2006-03-09) * alinéas [0006], [0007], [0013], [0014], [0057], [0119]; revendication 1 * | 1,7 | |
| A | ORTIZ ET AL: "Scaling multiple-point statistics to different univariate proportions" COMPUTERS AND GEOSCIENCES, PERGAMON PRESS, OXFORD, GB, vol. 33, no. 2, 22 décembre 2006 (2006-12-22), pages 191-201, XP005812781 ISSN: 0098-3004 * abrégé * | 1,7 | DOMAINES TECHNIQUES RECHERCHES (IPC) G01V |
| A | LIU ET AL: "Using the Snesim program for multiple-point statistical simulation" COMPUTERS AND GEOSCIENCES, PERGAMON PRESS, OXFORD, GB, vol. 32, no. 10, décembre 2006 (2006-12), pages 1544-1563, XP005625810 ISSN: 0098-3004 * abrégé * | 1,7 | |

-/--

Le présent rapport a été établi pour toutes les revendications

| Lieu de la recherche | Date d'achèvement de la recherche | Examinateur |
|---|---|---|
| La Haye | 4 juillet 2008 | Lorne, Benoît |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : doocument de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**Office européen**
**des brevets**

**RAPPORT DE RECHERCHE EUROPEENNE**

Numéro de la demande

EP 08 29 0286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | AL-KHALIFA MOHAMMAD A ET AL: "Overcoming the challenges of building 3D stochastic reservoir models using conceptual geological models - A case study" SPE MIDDLE EAST OIL GAS SHOW CONF.; SPE MIDDLE EAST OIL AND GAS SHOW AND CONFERENCE, MEOS, PROCEEDINGS; SPE 15TH MIDDLE EAST OIL AND GAS SHOW AND CONFERENCE, MEOS 2007 2007, vol. 1, 2007, pages 1-12, XP002465165 * abrégé * ----- | 1,7 | |
| A | BEUCHER H ET AL: "Using 3D seismic-derived information in lithofacies simulations. A case study" PROC SPE ANNU TECH CONF EXHIB; PROCEEDINGS - SPE ANNUAL TECHNICAL CONFERENCE AND EXHIBITION 1999 SOC PET ENG (SPE), RICHARDSON, TX, USA, vol. OMEGA, 1999, pages 581-592, XP002465166 * abrégé * ----- | 1,7 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 4 juillet 2008 | Lorne, Benoît |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 29 0286

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-07-2008

| Document brevet cité au rapport de recherche | | Date de publication | Membre(s) de la famille de brevet(s) | | Date de publication |
|---|---|---|---|---|---|
| EP 1760492 | A | 07-03-2007 | CA | 2558336 A1 | 05-03-2007 |
| | | | FR | 2890453 A1 | 09-03-2007 |
| | | | US | 2007055447 A1 | 08-03-2007 |
| US 2006052938 | A1 | 09-03-2006 | AU | 2005287335 A1 | 30-03-2006 |
| | | | CA | 2577845 A1 | 30-03-2006 |
| | | | CN | 101006364 A | 25-07-2007 |
| | | | EP | 1779145 A2 | 02-05-2007 |
| | | | WO | 2006033726 A2 | 30-03-2006 |

EPO FORM P0460

Pour tout renseignement concernant cette annexe : voir Journal Officiel de l'Office européen des brevets, No.12/82

# EP 1 978 379 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2780798
- US 6618695 B
- FR 2795841
- US 6813565 B
- FR 2821946
- US 7151845 B
- FR 2846767
- US 20040138862 A
- FR 2851670
- US 20060149520 A
- FR 0610792

### Littérature non-brevet citée dans la description

- **RAMARAO, B.S. ; LAVENUE, A.M. ; MARSILLY, G. DE ; MARIETTA, M.G.** Pilot point methodology for automated calibration of an ensemble of conditionally simulated transmissivity fields. 1. Theory and computational experiments. *WRR,* 1995, vol. 31 (3), 475-493
- Truncated plurigaussian method : theoretical and practical points of view. **LE LOC'H G. ; GALLI A.** Geostatistics Wollongong'96. Kluwer, 1997, vol. 96, 211-222
- **DOLIGEZ B. ; FOURNIER F. ; JOLIVET G. ; GAN-CARSKI S. ; BEUCHER H.** Seismic facies map integration in geostatistical geological model: a field case. *EAGE, conference & technical exhibition of European Association of Geoscientists & Engineers,* 27 Mai 2002, vol. 2, 215-219
- **BARENS L. ; BIVER P.** Reservoir Facies Prediction from Geostatistical Inverted Seismic Data. *Abu Dhabi International Conference and Exhibition,* 10 Octobre 2004
- **P. GOOVAERTS.** Geostatistics for Natural Resources Evaluation. Oxford University Press, 1997, 125-185